# EUROPEAN PATENT SPECIFICATION

(11) **EP 3 723 156 B1**
(45) Date of publication and mention of the grant of the patent: **02.07.2025**
(21) Application number: 19168901.7
(22) Date of filing: 12.04.2019
(51) Int. Cl.: H01M 50/209, H01M 50/291, H01M 50/293

(54) **SPACER FOR A BATTERY STACK**
ABSTANDSHALTER FÜR EINEN BATTERIESTAPEL
ESPACEUR DESTINÉ À UNE PILE DE BATTERIE

(43) Date of publication of application: 14.10.2020
(73) Proprietor: Samsung SDI Co., Ltd., Gyeonggi-do 17084 (KR)
(72) Inventor: Rath, Helmut, 8481 St. Veits/Südstmk. (AT)
(74) Representative: Gulde & Partner

(56) References cited:
- EP-A1- 2 843 725
- US-A1- 2014 120 391
- US-A1- 2018 269 449
- US-A1- 2018 309 175
- DATABASE WPI Week 200864, Derwent World Patents Index; AN 2008-K86342, XP002794764

## Description

The present invention refers to a spacer for arrangement between two prismatic battery cells of a battery stack. The invention further refers to a battery module comprising a battery stack including an alternating arrangement of battery cells and spacers.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery. In particular, rectangular battery cells are usually provided as a compact battery stack within a shared battery module housing. Said battery stack may include a pair of rigid end plates and, for example, a number of cooling plates placed between neighbouring battery cells.

Battery cells can swell during regular operation for example as a result of temperature changes. In case of swelling, the swelling-force may be transmitted and cumulated along the battery stack towards the pair of end plates. As a consequence, the end plates are usually reinforced to withstand mechanical stress and reduce the bending of the end plates. However, there may be still a significant mechanical stress on the battery cells being arranged at both ends of the battery stack next to the end plates. Thereby, the cell aging may be increased. In order to reduce the mechanical stress caused by swelling spacers may be arranged between the battery cells so as to at least partially compensate the swelling force.

For example, EP 1 701 404 B1 relates to a battery module including a plurality of prismatic battery cells and cell barriers disposed there between. Specifically, cell barrier of different strength are placed between the battery cells so as to avoid distortion of the module due to swelling. The barrier may have a cooling channel passing there through.

US 9,023,504 B2 refers to a secondary battery module including an alternating arrangement of prismatic battery cells and spacers. Each spacer includes a base portion contacting the side surface of a rectangular battery cell, a wing portion projecting from the base portion toward an adjacent battery spacer and enclosing at least a portion of a small side surface of the battery cell, and a fastening portion on the wing portion. The fastening portion is designed for coupling the spacer to an adjacent spacer. The base portion can be designed as a circumferential frame. The battery cell may expand into the free space enclosed by the frame during swelling.

US 2017/0365837 A1 discloses another battery module including an alternating arrangement of prismatic battery cells and spacers. The spacers shall be designed to correspond to a region of maximum swelling of the battery cell case. The spacers may be suspended from a peripheral edge of the battery cell case.

US 2018/0269449 A1 discloses another battery pack includes a plurality of prismatic secondary batteries with spacers each interposed therebetween, wherein the spacer has an upper recess and a lower recess on each surface.

US 2018/0309175 A1 discloses a support assembly for a battery array includes a spacer axially separating a first battery cell from a second battery cell, a frame that holds the spacer, and an insert secured to the frame.

EP 2843725 A1 discloses another battery assembly including battery cells and spacers that are alternately arranged.

US 2014/0120391 A1 discloses a barrier including side panels and supporting protrusions but lacks elements to avoid structural stress.

### Summary of Invention

Embodiments of the present disclosure refer to a spacer for arrangement between two prismatic battery cells of a battery stack. The spacer comprises:
a rectangular frame body enclosing an opening and
a pair of positioning elements which rise perpendicularly from a plane of the frame body to one side of the frame body and extend over the two corners of a common first longitudinal side.

In other words, an alternative spacer for a battery stack composed of a plurality of prismatic (secondary) battery cells is provided. The spacer will be arranged between neighboring battery cells of the stack. An aim of the spacer is to establish a space between the battery cells which allows compensating swelling, specifically swelling of the central parts of the battery cells. Thereby, the mechanical stress caused by swelling on the outermost battery cells and end plates of the battery stack may be reduced and the lifetime of the battery stack may be increased. The mechanical stress may be distributed more evenly over all battery cells of the battery stack. Furthermore, the pair of positioning elements facilitates the assembling process of the battery stack. The spacer is simply attached to one side of the battery cell with the help of the positioning elements, which facilitates automatization of the manufacturing process. As both positioning elements run over the corner, the position of the spacer in horizontal and vertical direction in the stack is predetermined.

According to one embodiment, a thickness of the frame body is in the range of 0.5 mm to 1.5 mm. If the thickness of the frame body is less than 0.5 mm, the spacer may not have improper mechanical stability and the space provided within the frame body may be too small for compensating swelling of the battery cells. If the thickness of the frame body is more than 1.5 mm, the weight and dimension of the battery stack is enlarged without need since currently conventional secondary battery cells do not extend over 1.5 mm under normal operating conditions.

The frame body and the positioning elements may be integrally formed. Thereby, the manufacturing process of the spacer may be simplified and the mechanical stability of the spacer may be increased.

Further, the spacer comprises a distance element being arranged on the first longitudinal side and rising perpendicularly from the plane of the frame body in a direction opposite to the positioning elements. The distance element has a length in the range of 0.5 mm to 1.0 mm. In other words, the distance element is positioned on a surface side of the first longitudinal side of the frame body, which is opposite to the side surface from which the positioning elements protrude. This creates a thin gap between the adjacent batteries cells which allows air circulation for cooling of the battery stack.

The distance element may be arranged at an outer edge of the first longitudinal side. For example, the spacer element can be a 90° folded fold which continuously extends between the two positioning elements. Further, the frame body and the distance element may be integrally formed, in particular together with the above mentioned positioning element. This may simplify the manufacturing process of the spacer and enhance mechanical stability thereof.

According to a further embodiment, the frame body, the positioning elements and/or the distance element are made of plastics. Preferably all the mentioned elements of the spacer are made of the same plastics. The plastics may have rigid or elastomeric characteristics.

Furthermore, an adhesive layer may be provided on a side surface of the frame body facing in the same direction as the positioning elements, in particular on a side surface of a second longitudinal side of the frame body. During the the assembling process of the battery stack, the adhesive layer will contact the side surface of the battery cell, where the spacer is placed on with its positioning elements. The adhesive layer thus allows to permanently fixing the desired position of the spacer within the battery stack.

According to another aspect of the present disclosure, a battery module for a vehicle is provided. The battery module comprises a battery stack including an alternating arrangement of battery cells and the spacers as described above.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
Fig. 1 illustrates an exploded view on a part of a battery module including a battery stack according to an embodiment; and
Fig. 2 illustrates the spacer used in assembling the battery stack of Figure 1.

### Detailed Description of the Invention

Features of the inventive concept and methods of accomplishing the same may be understood more readily by reference to the following detailed description of an embodiment and the accompanying drawings. The present invention, however, may be embodied in various different forms, and should not be construed as being limited to only the illustrated embodiment herein. Rather, this embodiment is provided as example so that this disclosure will be thorough and complete, and will fully convey the aspects and features of the present invention to those skilled in the art.

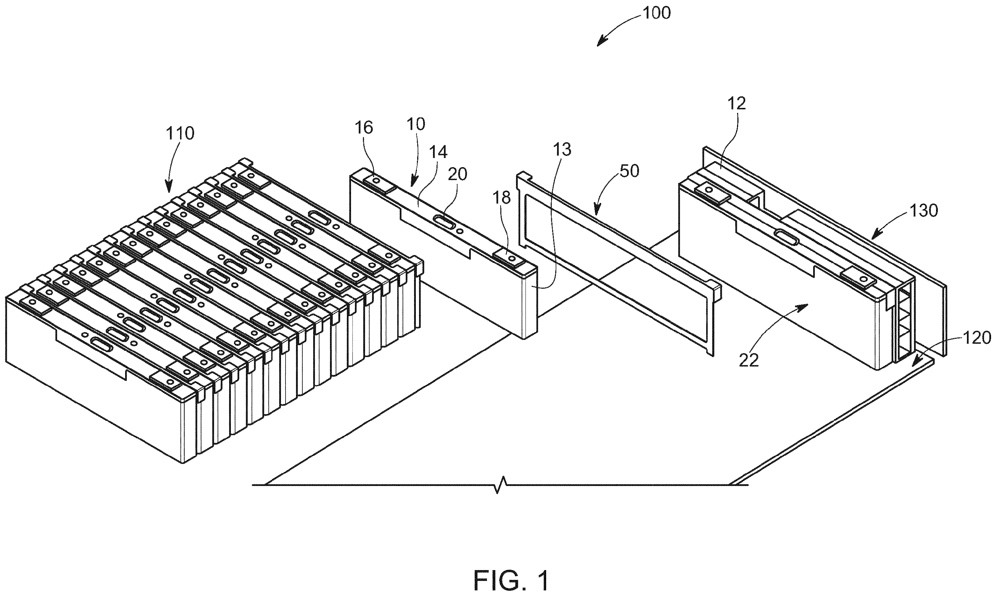

Figure 1 illustrates an exploded view on a part of a battery module 100 including a battery stack 110 according to an exemplary embodiment. The battery stack 110 will be accompanied in a housing of the battery module 100. For simplification, the drawing shows only a base plate 120 and a side pad 130 of said housing. The battery stack 110 will be placed on the base plate 120.

The battery stack 110 includes a plurality of battery cells 10 aligned in one direction. A pair of end plates 12 locks the battery stack 110. Here, each battery cell 10 is a prismatic (or rectangular) cell, the wide flat surfaces of the cells being stacked together to form the battery stack 110. Each battery cell 10 includes a battery case 13 configured for accommodation of an electrode assembly and an electrolyte. The battery case 13 is hermetically sealed by a cap assembly 14. The cap assembly 14 is provided with positive and negative electrode terminals 16 and 18 having different polarities, and a vent 20. The vent 20 is a safety means of the battery cell 10, which acts as a passage through which gas generated in the battery cell 10 is exhausted to the outside of the battery cell 10. A side surface of the battery case 13 may be covered with an insulation foil 22. The positive and negative electrode terminals 16 and 18 of neighboring battery cells 10 are electrically connected through a bus bar (not shown). Hence, the battery module 100 may be used as power source unit by electrically connecting the plurality of battery cells 10 as one bundle.

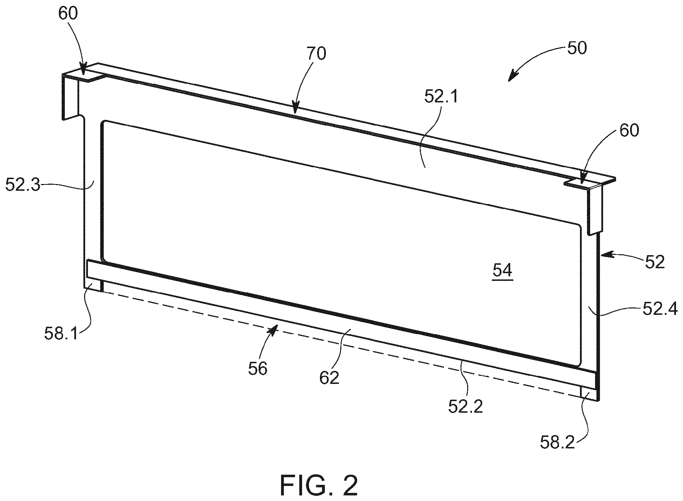

The battery stack 110 further includes a plurality of spacers 50. The spacers 50 and battery cells 10 are arranged alternately in the battery stack 110. Figure 2 is an enlarged illustration of one of the spacers 50 used in assembling the battery stack 110 of Figure 1.

The exemplary spacer 50 has a rectangular shape and includes a frame body 52. The frame body 52 encloses an opening 54, the purpose of which will be explained in more detail below. The frame body 52 contains a first longitudinal side 52.1, which is located in the battery stack 110 at the height of the cap assembly 14. A second longitudinal side 52.2 of the frame body 52 faces the base plate 120 of the housing. The second longitudinal side 52.2 of the exemplary spacer 50 is slightly offset inwards such that a small gap 56 is provided at the bottom of the spacer 50. Two transverse sides 52.3 and 52.4 connect the two longitudinal sides 52.1 and 52.2 of the frame body 52. A thickness of the frame body 52 - i.e. each of the longitudinal 52.1 and 52.2 and transverse sides 52.3 and 52.4 - may be about 1mm.

The spacer 50 further includes a pair of positioning elements 60 which rise perpendicularly from a plane of the frame body 52 to one side of the frame body 52 and extend over the two corners of the common first longitudinal side 52.1. Here, the positioning elements 60 have an L-shape and extend about 5mm from the plane of the frame body 52. As shown in Figure 1, the positioning elements 60 are positioned horizontally on the cap assembly 14 and vertically on the two transverse sides of the battery case 13 within the finalized battery stack 110. Thus, the spacer 50 can be easily stacked onto a battery cell 10 during the assembling process of the battery stack 110, which allows rapid automatization of the process step.

Further, an adhesive layer 62 is provided on the same side surface of the frame body 52 from which the positioning elements 60 extend. Here, the adhesive layer 62 is provided on a side surface of a second longitudinal side 52.2. After the spacer 50 has been placed on the side of the battery cell 10, the adhesive layer 62 adheres to the side surface of the battery case 13.

The spacer 50 further comprises a distance element 70 being arranged on the first longitudinal side 52.1 and rising perpendicularly from the plane of the frame body 52 in a direction opposite to the positioning elements 60. For example, the distance element 70 may have a length of about 0.75mm. According to the exemplary embodiment, the distance element 70 is arranged at an outer edge of the first longitudinal side 52.1. The exemplary distance element 70 has the shape of a bended fold. The distance element 70 is used to define a gap on the side of the spacer 50 opposite to the side of the spacer 50 where the adhesive layer 62 and the positioning elements 60 are provided. In other words, the distance element 70 provides a small creepage distance between neighbouring battery cells 10. Generally, the battery cells 10 generate a large amount of heat while being charged/discharged. The generated heat is accumulated in the battery cells 10, thereby accelerating the deterioration of the battery cells 10. Therefore, the battery module 100 needs to be cooled. The gap defined on one side of the spacer 50 will thus allow to, for example, circulating air to cool the battery cells 10.

In alternative or addition to the above mentioned embodiment, a thermal conducting material may be provided at a bottom side of the battery cells 10, respectively on the base plate 120 of the housing. The thermal conducting material is to enhance a thermal contact between a cooling system provided in a lower part of the battery module 100 and the single battery cells 10. According to one embodiment, the main components of the battery stack 110 - in particular the batteries cells 10, spacers 50, and end plates 12 - will be assembled along with applying a compression force. Therefore, the longitudinal side 52.2 of the exemplary spacer 50 may be slightly offset inwards such that a small gap 56 is provided at the bottom of the spacer 50. The free ends 58.1 and 58.2 at the lower transverse sides 52.3 and 52.4 will transmit the force applied to the edges of the stiff battery cells 10 into the thermal conducting material so as to avoid damage of the battery case 13 due to mechanical stress. Furthermore, the thermal conducting material may spread into the gap 56 at the bottom side of the spacer 50 and may thereby increase a contact surface to the battery case 13 of the battery cells 10. The thermal conductive material may be provided as a foil, layer or mat composed, for example, of a plastic material including metallic particles.

During regular operation the battery cells 10 may expand slightly. The amount of swelling will be at largest in a central area of the side surfaces of the battery cells 10. Therefore, the opening 54 of the spacer 50 will allow expansion of the battery cells 10. This avoids accumulation of mechanical stresses at the two ends of the battery stack 110.

The frame body 52, the positioning element 60 as well as the distance element 70 may be integrally formed, i.e. are provided as one-piece part. The mentioned elements of the spacer 50 may be made of the same plastics, which may be, for example, rigid plastics.

### Reference signs

- 10: battery cell
- 12: end plate
- 13: battery case
- 14: cap assembly
- 16: positive electrode terminal
- 18: negative electrode terminal
- 20: vent
- 22: insulation foil
- 50: spacer
- 52: frame body
- 52.1, 52.2: longitudinal sides of the frame body
- 52.3, 52.4: transverse sides of the frame body
- 54: opening
- 56: gap
- 58.1, 58.2: free ends of the transverse sides
- 60: positioning element
- 62: adhesive layer
- 70: distance element
- 100: battery module
- 110: battery stack
- 120: base plate
- 130: side pad

## Claims

1. A spacer (50) for arrangement between two prismatic battery cells (10) of a battery stack (110), the spacer (50) comprising:
a rectangular frame body (52) enclosing an opening (54) and
a pair of positioning elements (60) which rise perpendicularly from a plane of the frame body (52) to one side of the frame body (52) and extend over the two corners of a common first longitudinal side (52.1) and wherein the spacer (50) further comprises a distance element (70) being arranged on the first longitudinal side (52.1) and rising perpendicularly from the plane of the frame body (52) in a direction opposite to the positioning elements (60), the distance element (70) having a length in the range of 0.5 mm to 1.0 mm.

2. The spacer of claim 1, wherein the frame body (52) and the positioning elements (60) are integrally formed.

3. The spacer of claim 1 or 2, wherein a thickness of the frame body (52) is in the range of 0.5 mm to 1.5 mm.

4. The spacer of claim 1, wherein the distance element (70) is arranged at an outer edge of the first longitudinal side (52.1).

5. The spacer of claim 1 or 4, wherein the frame body (52) and the distance element (70) are integrally formed.

6. The spacer of any one of the preceding claims, wherein the frame body (52), the positioning elements (60), and/or the distance element (70) are made of plastics.

7. The spacer of any one of the preceding claims, wherein an adhesive layer (62) is provided on a side surface of the frame body (52) facing in the same direction as the positioning elements (60).

8. The spacer of claim 7, wherein the adhesive layer (62) is provided on a side surface of a second longitudinal side (52.2).

9. A battery module (100) comprising a battery stack (110) including an alternating arrangement of battery cells (10) and spacers (50) as defined in any one of the preceding claims.

## Patentansprüche

1. Abstandhalter (50) zur Anordnung zwischen zwei prismatischen Batteriezellen (10) eines Batteriestapels (110), wobei der Abstandhalter (50) Folgendes umfasst:
einem rechteckigen Rahmenkörper (52), der eine Öffnung (54) umschließt, und
ein Paar von Positionierelementen (60), die sich senkrecht von einer Ebene des Rahmenkörpers (52) zu einer Seite des Rahmenkörpers (52) erheben und sich über die zwei Ecken einer gemeinsamen ersten Längsseite (52.1) erstrecken, und wobei der Abstandhalter (50) ferner ein Abstandselement (70) umfasst, das auf der ersten Längsseite (52.1) angeordnet ist und sich senkrecht von der Ebene des Rahmenkörpers (52) in eine den Positionierelementen (60) entgegengesetzte Richtung erhebt, wobei das Abstandselement (70) eine Länge im Bereich von 0,5 mm bis 1,0 mm aufweist.

2. Abstandhalter nach Anspruch 1, wobei der Rahmenkörper (52) und die Positionierelemente (60) einstückig ausgebildet sind.

3. Abstandhalter nach Anspruch 1 oder 2, wobei eine Dicke des Rahmenkörpers (52) im Bereich von 0,5 mm bis 1,5 mm liegt.

4. Abstandhalter nach Anspruch 1, wobei das Abstandselement (70) an einer Außenkante der ersten Längsseite (52.1) angeordnet ist.

5. Abstandhalter nach Anspruch 1 oder 4, wobei der Rahmenkörper (52) und das Abstandselement (70) einstückig ausgebildet sind.

6. Abstandhalter nach einem der vorhergehenden Ansprüche, wobei der Rahmenkörper (52), die Positionierelemente (60) und/oder das Abstandselement (70) aus Kunststoff hergestellt sind.

7. Abstandhalter nach einem der vorhergehenden Ansprüche, wobei eine Klebeschicht (62) auf einer Seitenfläche des Rahmenkörpers (52) bereitgestellt ist, die in die gleiche Richtung wie die Positionierelemente (60) weist.

8. Abstandhalter nach Anspruch 7, wobei die Klebeschicht (62) auf einer Seitenfläche einer zweiten Längsseite (52.2) bereitgestellt ist.

9. Batteriemodul (100). umfassend einen Batteriestapel (110), der eine abwechselnde Anordnung von Batteriezellen (10) und Abstandhaltern (50) nach einem der vorhergehenden Ansprüche beinhaltet.

## Revendications

1. Entretoise (50) destinée à être agencée entre deux cellules de batterie prismatiques (10) d'un empilement de batterie (110), l'entretoise (50) comprenant :
un corps de cadre (52) rectangulaire entourant une ouverture (54) et
une paire d'éléments de positionnement (60) qui se dressent perpendiculairement d'un plan du corps de cadre (52) à un côté du corps de cadre (52) et s'étendent sur les deux coins d'un premier côté longitudinal (52.1) commun et dans laquelle l'entretoise (50) comprend en outre un élément d'écartement (70) agencé sur le premier côté longitudinal (52.1) et se dressant perpendiculairement à partir du plan du corps de cadre (52) dans une direction opposée aux éléments de positionnement (60), l'élément d'écartement (70) ayant une longueur dans une plage de 0,5 mm à 1,0 mm.

2. Entretoise selon la revendication 1, dans laquelle le corps de cadre (52) et les éléments de positionnement (60) sont formés d'un seul tenant.

3. Entretoise selon la revendication 1 ou 2, dans laquelle une épaisseur du corps de cadre (52) est dans la plage de 0,5 mm à 1,5 mm.

4. Entretoise selon la revendication 1, dans laquelle l'élément d'écartement (70) est agencé au niveau d'un bord extérieur du premier côté longitudinal (52.1).

5. Entretoise selon la revendication 1 ou 4, dans laquelle le corps de cadre (52) et l'élément d'écartement (70) sont formés d'un seul tenant.

6. Entretoise selon l'une quelconque des revendications précédentes, dans laquelle le corps de cadre (52), les éléments de positionnement (60) et/ou l'élément d'écartement (70) sont en matières plastiques.

7. Entretoise selon l'une quelconque des revendications précédentes, dans laquelle une couche adhésive (62) est prévue sur une surface latérale du corps de cadre (52) orientée dans la même direction que les éléments de positionnement (60).

8. Entretoise selon la revendication 7, dans laquelle la couche adhésive (62) est prévue sur une surface latérale d'un deuxième côté longitudinal (52.2).

9. Module de batterie (100) comprenant un empilement de batterie (110) comportant un agencement alterné de cellules de batterie (10) et d'entretoises (50) tel que défini selon l'une quelconque des revendications précédentes.
